# EUROPEAN PATENT APPLICATION

(11) **EP 3 518 057 A1**
(43) Date of publication of application: **31.07.2019**
(21) Application number: 18305059.0
(22) Date of filing: 25.01.2018
(51) Int. Cl.: G05B 19/05, G05B 19/418

(54) **AN OPERATIONAL SYSTEM COMPRISING A PROGRAMMABLE LOGIC CONTROLLER**

(71) Applicant: FRAMATOME, 92400 Courbevoie (FR)
(72) Inventor: THEVENON, Jean-Bernard, 78180 MONTIGNY-LE-BRETONNEUX (FR)
(74) Representative: Lavoix

(57) **Abstract**

The operational system comprises an operational subsystem (4), a programmable logic controller (12) configured to control the operational subsystem (4), a plurality of wired operational units (8), each wired operational unit (8) being in communication with the programmable logic controller (12) via a wire connection (20). The programmable logic controller (12) is equipped with a wireless communication device (18) configured for wireless communication with at least one wireless operational unit (10).

## Description

The invention relates to an operational system comprising a programmable logic controller configured for controlling an operational subsystem of the operational system.

A programmable logic controller (or programmable controller) is a digital computer adapted for controlling an installation such as an industrial plant with high reliability, ease of programming and fault diagnosis.

A programmable logic controller is configured for the automatic control of an operational subsystem e.g. by controlling actuators of the operational subsystem as a function of logic, analogic and/or digital signals provided by sensors of the operational subsystem and representative of the state of the operational subsystem.

A programmable logic controller generally comprises a central processing unit (CPU), a computer memory, modules and an internal bus connecting the CPU, the memory and the modules. The modules include input/output modules (or I/O modules) for receiving measure signals from sensors and transmitting control signals to actuators.

It may be necessary or desired to improve control of an operational subsystem by adding sensors and/or actuators to the operational subsystem. However, the maximal capacity of sensors and/or actuators usable with the programmable logic controller may be reached, a cabinet housing the programmable logic controller may be full and/or lead-through for wire connections between the sensors and/or actuators may be full, whereby it is not possible to simply adapt the programmable logic controller.

In technical fields requiring qualifications of the operational system by an administrative authority, such as the nuclear field, modifying the programmable logic controller, the cabinet for allowing addition of sensors and/or actuators and/or lead-through for wire connections may need a requalification of the operational system and the programmable logic controller. This represents a long and costly process.

One of the objects of the invention is to provide an operational system comprising a programmable logic controller for controlling an operational subsystem, the operational system having enhanced adaptability.

To this end, the operational system comprising an operational subsystem, a programmable logic controller configured to control the operational subsystem, a plurality of wired operational units, each wired operational unit being in communication with the programmable logic controller via a wire connection, wherein the programmable logic controller is equipped with a wireless communication device configured for wireless communication with at least one wireless operational unit.

By providing the programmable logic controller with a wireless communication device, natively or in retrofit, it becomes possible to adapt the operational system by providing wireless operational units with wireless communication capabilities, said wireless operational units being in wireless communication with the programmable logic controller via the wireless communication device.

In operation systems requiring qualification of the operational system before implementation, this may avoid or lower the need for requalification, thus saving time and money.

In specific embodiments, the operational system may comprise one or several of the following optional features, take individually or according to any technically feasible combination:
- the wireless communication device is in communication with a plurality of wireless operational units ;
- at least one wireless operational unit is dedicated to the operational subsystem which is controlled by the programmable logic controller;
- at least one wireless operational unit is dedicated to another operational system distinct from the operational system ;
- the programmable logic controller is in communication with an electronic controller configured for controlling the other operational subsystem, the programmable logic controller being configured for transferring signals between each wireless operational unit dedicated to said other operational system and the electronic controller;
- the wireless communication device is plugged directly to a port of an internal bus of the programmable logic controller;
- the wireless communication device is connected to an internal bus of the programmable logic controller via a computer coupler, the computer coupler being connected directly to a port of the internal bus ;
- the wireless communication device is plugged directly to an I/O module of the programmable logic controller;
- the wireless communication device is configured for communicating with the programmable logic controller by emulating communication with a wired operational unit connected to the I/O module ;
- the programmable logic controller is located inside a room or a building, the operational system being located outside, in another room or in another building, the wire connection between each wired operational unit in communication with the programmable logic controller extending through at least one wall of a room or building;
- the wireless communication device is located inside a cabinet housing the programmable logic controller and is connected to an antenna located outside the cabinet through a wall of the cabinet, or the wireless communication device is located outside a cabinet housing the programmable logic controller and is wire connected to the programmable logic controller through a wall of the cabinet;
- the wireless communication device is a computer network gateway configured for interfacing the programmable logic controller with a wireless communication network defined by the wireless communication device and the wireless operational unit(s);
- the operational subsystem is dedicated to the operational control of a nuclear reactor;
- the operational subsystem under control of programmable logic controller is located at least in part in a nuclear reactor building, the programmable logic controller being located in a control building distinct from the nuclear reactor building and/or at least some of the operational unit(s) are located in at least one operational building and the programmable logic controller is located in a control building distinct from each operational building.

The invention also relates to a process of retrofitting an operational system comprising an operational subsystem, a programmable logic controller configured to control the operational subsystem and a plurality of wired operational units, each wired operational unit being in communication with the programmable logic controller via a wire connection, the process comprising retrofitting a wireless communication device to the programmable logic controller, and providing at least one wireless operational unit, each wireless operational unit being configured for wireless communication with the programmable logic controller via the wireless communication device.

In an embodiment, at least one wireless operational unit dedicated to the operational subsystem is provided and/or at least one wireless operational unit dedicated to another operational subsystem distinct from the operational subsystem is provided, said at least one wireless operational unit being in communication with an electronic controller configured for controlling the other operational subsystem via the programmable logic controller.

The invention and its advantages will become apparent upon reading the following description, given solely by way of non-limitative example, and made with reference to the appended drawings, in which:
- Figure 1 is diagrammatical view of an example of an operational system including an operational subsystem controlled by a programmable logic controller; and
- Figures 2 - 4 are diagrammatical views similar to that of Figure 1 and illustrating other examples of operational systems.

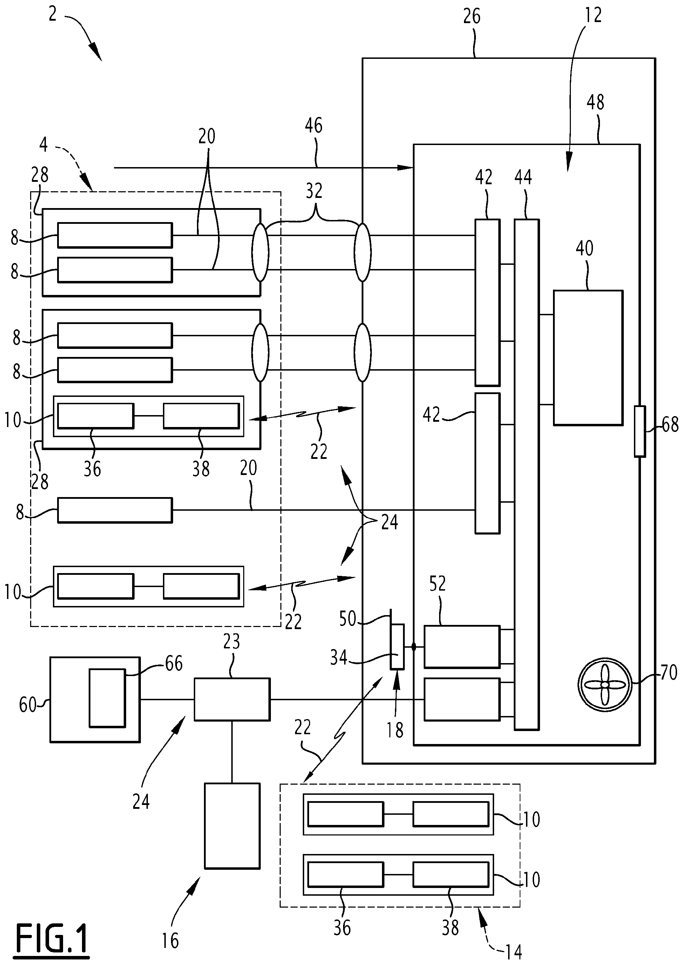

The operational system 2 illustrated on Figure 1, comprises a first operational subsystem 4, operational units 8, 10 and a programmable logic controller 12 configured for controlling the first operational subsystem 4.

The operational units 8, 10 may comprise at least one sensing operational unit 8, 10 and/or at least one actuating operational unit 8, 10.

Each sensing operational unit 8, 10 comprises a sensor configured to deliver an output signal. Each sensing operational unit 8, 10 may deliver an output signal representative of the value of a physical parameter or a signal indicative of a threshold being passed or a signal indicative of a position. Each sensing operational unit 8, 10 may deliver a binary signal, an analog signal or a digital signal.

Each actuating operational unit 8, 10 comprises an actuator configured to actuate (or move) an effector. Each actuating operational unit 8, 10 may be for example a servomotor, a motor, a jack, e.g. an electric jack or a hydraulic jack, or a digital or electromechanical switch or connector.

In one exemplary embodiment, the plurality of operational units 8, 10 comprises at least one sensing operational unit 8, 10 and/or at least one actuating operational unit 8, 10 which are integrated in (or dedicated to) the first operational subsystem 4.

The programmable logic controller 12 is configured for controlling the first operational subsystem 4 based on output signals provided by the sensing operational units 8, 10 integrated in (or dedicated to) the first operational subsystem 4 and/or output signals generated by the programmable logic controller 12 and sent to actuating operational unit 8, 10 integrated in (or dedicated to) the first operational subsystem 4.

The output signals provided by the sensing operational units 8, 10 integrated in (or dedicated to) the first operational subsystem 4 defined the input signals of the programmable logic controller 12.

Each output signal sent by the programmable logic controller 12 to an actuating operational unit 8,10 integrated in (or dedicated to) the first operational subsystem 4 may be generated by the programmable logic controller 12 depending on one or several input signal(s) received from sensing operational units 8, 10 integrated in (or dedicated to) the first operational subsystem 4.

As illustrated on Figure 1, the operational system 2 optionally comprises a second operational subsystem 14 distinct from the first operational subsystem 4.

According to this option, the operational system 2 comprises at least one operational unit 8, 10 integrated in the second operational subsystem 14 and an electronic controller 16 configured for controlling the second operational subsystem 14.

The operational units 8, 10 integrated in the second operational subsystem 14 may include at least one sensing operational unit 8, 10 configured to deliver an output signal representative of the state of the second operational subsystem 14 and/or at least one an actuating operational unit 8, 10 comprising an actuator configured to move an effector of the second operational subsystem 14.

The electronic controller 16 is configured for controlling the second operational subsystem 14 based on output signal(s) provided the sensing operational unit(s) 8, 10 integrated in the second operational subsystem 14 and/or output signal generated by the electronic controller 16 and send to the actuating operational units 8, 10 integrated in the second operational subsystem 14.

The output signals provided by the sensing operational units 8, 10 integrated in (or dedicated to) the second operational subsystem 14 defined the input signals of the electronic controller 16.

Each output signal sent by the electronic controller 16 to an actuating operational unit 8,10 integrated in (or dedicated to) the second operational subsystem 14 may be generated by the electronic controller 16 depending on one or several input signal(s) received from sensing operational units 8, 10 integrated in (or dedicated to) the second operational subsystem 14.

The electronic controller 16 is distinct from the programmable logic controller 12 which controls the first operational subsystem 4. The electronic controller 16 may itself be provided as a programmable logic controller or another type of electronic controller.

In a preferred exemplary embodiment, operational units 8, 10 dedicated to the first operational subsystem 4 and operational units 8, 10 dedicated to the second operational subsystem 4 are distinct.

In a particular exemplary embodiment, the programmable logic controller 12 controls each actuating operational unit 8, 10 dedicated to the first operational subsystem 4 independently from any output signal provided by each sensing operational unit 8, 10 dedicated to the second operational subsystem 14.

The programmable logic controller 12 is equipped with a wireless communication device 18.

The operational units 8, 10 include a plurality of wired operational units 8 in wire communication with the programmable logic controller 12 via wire connection 20 and at least one wireless operational unit 10 configured for wireless communication with the programmable logic controller 12 via the wireless communication device 18.

In operation, each wireless operational unit 10 is in wireless communication with the wireless communication device 18 via a wireless connection 22.

In the illustrated example, each wired operational unit 8 in wire communication with the programmable logic controller 12 via a wire connection 22 is dedicated to the first operational subsystem 4.

In other words, among the plurality of wire communication units 8, the programmable logic controller 12 is in wire communication exclusively with wired operational unit(s) 8 integrated into the first operational subsystem 4 which is controlled by the programmable logic controller 12.

The programmable logic controller 12 may be in wireless communication with at least one wireless operational unit 10 integrated into the first operational subsystem 4 that is controlled by the programmable logic controller 12 and/or with at least one wireless operational unit 10 integrated into the second operational subsystem 14 which is not controlled by the programmable logic controller 12.

In the illustrated example, the programmable logic controller 12 is in wireless communication with at least one wireless operational unit 10 integrated into the first operational subsystem 4 that is controlled by the programmable logic controller 12 and with at least one wireless operational unit 10 integrated into the second operational subsystem 14 which is not controlled by the programmable logic controller 12.

In another example, each wireless operational unit 10 in wireless communication with the programmable logic controller 12 is dedicated to the first operational subsystem 4. In other words, the programmable logic controller 12 is in wireless communication exclusively with wireless operational unit(s) 10 which is(are) integrated into the first operational subsystem 4 which is controlled by the programmable logic controller 12.

In yet another example, each wireless operational unit 10 in wireless communication with the programmable logic controller 12 is dedicated to the second operational subsystem 14. In other words, the programmable logic controller 12 is in wireless communication exclusively with wireless operational units 10 integrated into the second operational system which is not controlled by the programmable logic controller 12.

When the programmable logic controller 12 is in wireless communication with at least one wireless operational unit 10 integrated in the second operational subsystem 14, the programmable logic controller 12 is in communication with the electronic controller 16 which controls the second operational subsystem 14, the programmable logic controller 12 being configured for transferring signals between the wireless operational unit 10 integrated in the second operational subsystem 14 and the electronic controller 16 which controls the second operational subsystem 14.

The programmable logic controller 12 is in communication with the electronic controller 16 e.g. via a wire communication network 23.

In an exemplary embodiment, the second operational subsystem 14 comprises exclusively wireless operational unit(s) 10 in communication with the programmable logic controller 12. The electronic controller 16 is in communication with each wireless operational unit 10 integrated into the second operational subsystem 14 exclusively via the programmable logic controller 12.

Such embodiments allows to natively set up the second operational subsystem 14 or to retrofit the second operational subsystem 14 with at least one wireless operational unit 10, with using the programmable logic controller 12 as a communication channel between the second operational unit 14 and the electronic controller 16 which controls the second operational subsystem 14.

In operation, the programmable logic controller 12 automatically controls the first operational subsystem 4 with receiving signals from and/or sending signals to the operational units 8, 10 integrated in the first operational subsystem 4.

For example, when these operational units 8, 10 include at least one sensing operation unit 8, 10 and at least one actuating operational unit 8, 10, the programmable logic controller 12 automatically controls the first operational subsystem 4 by sending control signals to the actuating operational units 8, 10 integrated in the first operational subsystem 4 depending on measure signal(s) provided by the sensing operational unit(s) 8, 10 integrated in the first operational subsystem 4.

Optionally, in case the programmable logic controller 12 is in wireless communication with at least one wireless operational unit 10 integrated in the second operational subsystem 14, the programmable logic controller 12 transmits signals between each said wireless operational unit 10 integrated in the second operational subsystem 14 and the electronic controller 16 which controls the second operational subsystem 14.

Signals are transmitted between the programmable logic controller 12 and each wired operational unit 8 via the wire connection 20 between the programmable logic controller 12 and said wired operational unit 8.

Signals are transmitted between the programmable logic controller 12 and each wireless operational unit 10 via the wireless connection 22 provided between the programmable logic controller 12 and said wireless operational unit 10, i.e. via the wireless communication device 18 of the programmable logic controller 12.

The wireless communication device 18 is for example a computer network gateway configured for interfacing a wireless computer network 24, which is defined by the wireless communication device 18 and the wireless operational units 10, with the programmable logic controller 12.

In one exemplary embodiment, the wireless computer network 24 has a star-shaped topology with the wireless communication device 18 being at the center of the topology, each wireless operational unit 10 being in direct communication with the wireless communication device 18 via a respective wireless connection 22. In variants, the wireless computer network 24 uses different typologies.

As illustrated on Figure 1, in one exemplary embodiment, the programmable logic controller 12 and the operational units 8, 10 dedicated to the first operational subsystem 4 are not located in a same room or building.

The programmable logic controller 12 may be located inside a control room or building 26 while the first operational subsystem 4 may be located outside and/or in at least one operational room or building.

In the illustrative example Figure 1, the first operational systems 4 comprises two operational assemblies located in respective operational buildings 28 and one outside operational assembly which is located outside.

Each wire connection 20 between a wired operational unit 8 integrated in the first operational subsystem 4 and the programmable logic controller 12 passes through at least one building wall via a cable lead-through 32.

When wire connections 22 pass through building walls via lead-through, if all cable lead-through are already used, it would be necessary to provide additional lead-through to be able to install additional operational units.

However, in an operational system 2 in which such modifications requires requalification of the operational system 2, such a nuclear reactor or nuclear plant, providing additional lead-through is expensive and costly.

Conversely, the addition of at least one wireless operational unit 10 configured for wireless communication with the programmable logic controller 12 avoids providing additional lead-through, and avoids the need for requalification.

If a wireless operational unit 10 is integrated into the first operational subsystem 4 which is controlled by the programmable logic controller 12, this allows retrofitting additional operational unit(s) to the first operational subsystem 4 without the need for creating or adapting lead-through.

When provided, the second operational subsystem 14 may be located in a room or building distinct from the programmable logic controller 12, or the second operational subsystem 14 may be located in the same room or building, and even comprise at least one operational unit 8, 10 located in the cabinet in which the programmable logic controller 12 is housed, as it will be explained later below.

The wireless communication device 18 and each wireless operational unit 10 are for example configured for radiofrequency wireless communication.

The wireless communication device 18 comprises a radiofrequency transceiver 34. Each wireless operational unit 10 comprises an operational part 36 and a radiofrequency transceiver 38 configured for wireless communication with the wireless communication device 18. The operational part 36 is a sensor in a sensing wireless operational unit 10 or an actuator in an actuating wireless operational unit 10.

In one example, the wireless communication device 18 and the wireless operational units 10 use a LoRa (Long Range) radiofrequency communication technology. The wireless connections 22 of the wireless communication network 24 are LoRa connections.

The LoRa technology allows communication with a long range and through walls, namely through thick walls. This technology is thus namely adapted to nuclear installations, namely for communication between a control building and at least one operational building.

As visible on Figure 1, the programmable logic controller 12 comprises a central processing unit (CPU) 40 and modules 42 connected to the central processing unit 40 via an internal bus 44 for transferring data between the central processing unit 40 and the modules 42.

The programmable logic controller 12 comprises for example a control program stored in a memory and that may be executed by the central processing unit 40, the control program comprising instructions for controlling the first operational subsystem 4.

When operational units 8, 10 integrated in the first operational subsystem 4 comprise at least one sensing operational unit 8, 10 and at least one actuating operation unit 8, 10, the control program comprises instructions for controlling the actuating operational units 8, 10 integrated in the first operational subsystem 4 depending on signals provided by the sensing operational units 8, 10 integrated in the first operational subsystem 4.

The modules 42 include at least one input/output module (I/O module) 42. Each I/O module 42 is configured for the transfer of signals between the programmable logic controller 12 and one or several operational units 8, 10. Each I/O module 42 comprises one or several ports for a wire connection to the I/O modules 42.

Each wired operational unit 8 is connected to the programmable logic controller 12 via an I/O module 42. Each wire connection 20 extends between the corresponding wired operational unit 8 and a port of an I/O module 42 of the programmable logic controller 12.

The programmable logic controller 12 is connected via a power supply line 46 to one or several power sources (not shown) external to the programmable logic controller 12, e.g. a power supply network and/or an auxiliary power source.

As illustrated on Figure 1, the programmable logic controller 12 is housed in a cabinet 48. The wireless communication device 18 is located outside the cabinet 48 and is connected via a cable to the programmable logic controller 12 through a wall of the cabinet 48. The wireless communication device 18 integrates a radiofrequency antenna 50.

In a variant, the wireless communication device 18 may be housed inside the cabinet 48 and connected to a remote radiofrequency antenna located outside the cabinet 48.

The cabinet 48 is e.g. metallic whereby radiofrequency communication is impaired between inside and outside the cabinet 48, as the cabinet 48 forms a Faraday cage.

The wireless communication device 18 attached outside the cabinet 48 or an antenna 50 attached outside the cabinet 48 allows operating a wireless communication with the wireless operational units 10.

As illustrated on Figure 1, the wireless communication device 18 is for example connected to the internal bus 44 of the programmable logic controller 12 via a computer coupler 52.

The computer coupler 52 comprises a connector for plugging the computer coupler 50 directly to a port of the internal bus 44 and a port for connection of the wireless communication device 18 to the computer coupler 52. The wireless communication device 18 is here connected to the computer coupler 52 via a cable.

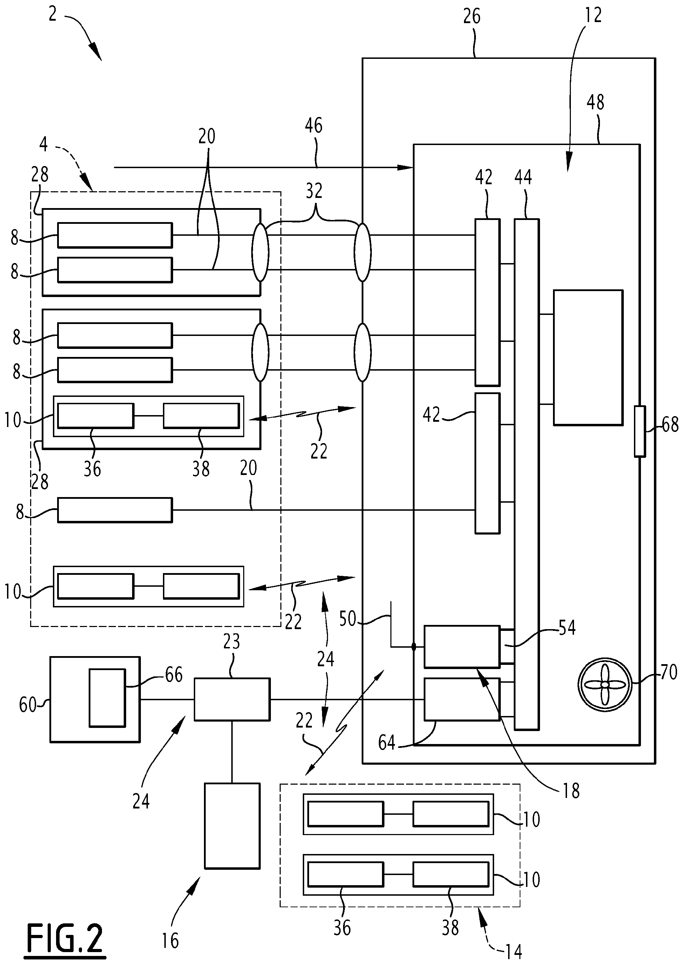

As illustrated on Figure 2, in another example, the wireless communication device 18 is configured to plug directly to a port of the internal bus 44 of the programmable logic controller 12.

The wireless communication device 18 comprises a connector 54 configured to plug with a port of the internal bus 44 of the programmable logic controller 12. The wireless communication device 18 may have an Ethernet connector 54, the internal bus 44 being an Ethernet bus.

The wireless communication device 18 is for example a computer network gateway that is specifically configured for interfacing the wireless communication network 24 with internal bus 44 of the programmable logic controller 12.

Beside, as also illustrated on Figure 2, the wireless communication device 18 is for example housed inside the cabinet 48.

The wireless communication device 18 is connected to a remote radiofrequency antenna 50 located outside the cabinet 48 via a wire connection. The antenna 50 may be attached to the external face of a wall of the cabinet 48.

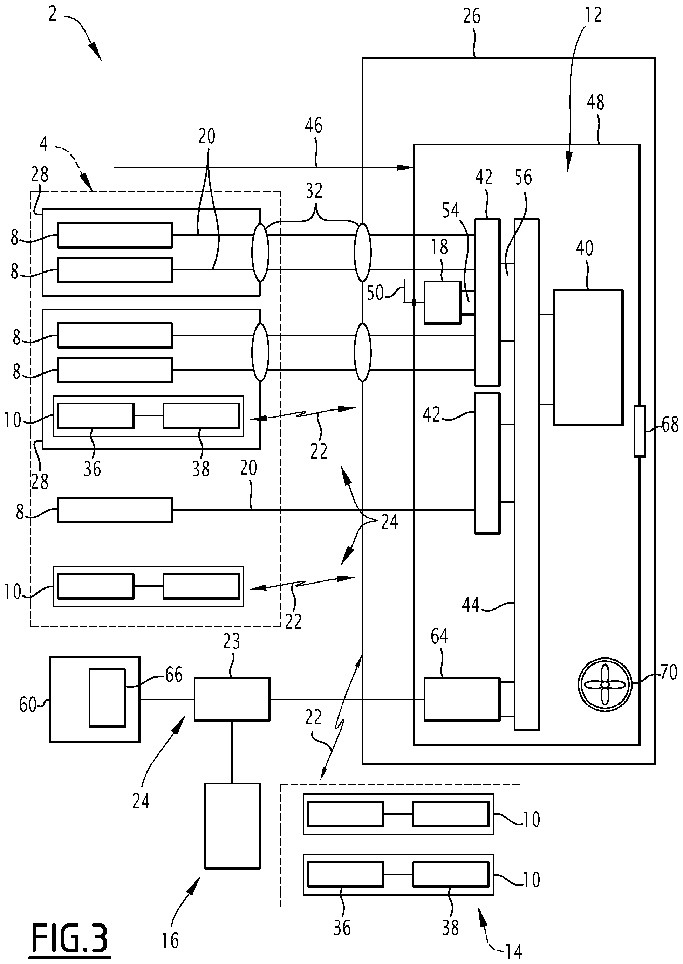

As illustrated in Figure 3, in another example, the wireless communication device 18 is configured to plug directly to an I/O module 42 of the programmable logic controller 12. The wireless communication device 18 comprises a connector 54 configured to plug with a port of the I/O module 42 of the programmable logic controller 12.

The I/O module 42 is plugged directly to a port of the internal bus 44 of the programmable logic controller 12. The I/O module 42 has a connector 56 configured to plug with a port of the internal bus 44 of the programmable logic controller 12.

The wireless communication device 18 may be located inside the cabinet 48 and connected to a radiofrequency antenna 48 located outside the cabinet 48 via a wire connection.

The wireless communication device 18 may advantageously be configured to emulate a wired operational unit 8 for the communication between the wireless communication device 18 and the I/O module 42. In other words, the wireless communication device 18 may be configured to exchange data with the I/O module 42 as if the wireless communication device 18 was a wired operational unit 8, i.e. using the same communication protocol. This avoids any hardware or software adaptation or modification of the I/O module 42. The wireless communication device 18 may simply be plugged to the I/O module 42 and ready to operate.

In one exemplary embodiment, the I/O module 42 is an electronic board and the wireless communication device 18 is also provided as an electronic board plugged to the I/O module 42. In other words, the I/O module 42 thus defines a motherboard and the wireless communication device 18 defines a daughterboard plugged to said motherboard. The I/O module 42 has a board plug (or "slot") and the wireless communication device 18 has a connector that fits into the board plug.

As illustrated on Figures 1 - 3, the wireless operational units 10 are all in communication with the programmable logic controller 12 via the same wireless communication device 18.

When the operational system 2 comprises at least one wireless operational unit 10 integrated into the first operational subsystem 4 and at least one wireless operational unit 10 integrated into the second operational system 14, both types of wireless operational units 10 are in wireless communication with the programmable logic controller 12 via the same wireless communication device 18.

As illustrated on Figures 1 - 3, the operational system 2 may optionally comprise a supervisory computer 60 that is programmed for supervising one or several electronic controller(s), including the programmable logic controller 12, and optionally the electronic controller 16.

In one particular example, the supervisory computer 60 is programmed for supervisory control and data acquisition (also named "SCADA" in the field of automated control systems).

Alternatively or optionally, the supervisory computer 60 belongs to a supervision station comprising the supervisory computer 60 and a human-machine interface system allowing a human operator to supervise the operation of the operational system(s).

The programmable logic controller 12 is connected to the supervisory computer 60 via the wire computer network 23.

The programmable logic controller 12 is connected to the wire computer network 23 via a network computer coupler 64 that is plugged directly to a port of the internal bus 44 of the programmable logic controller 12.

Alternatively or optionally, the supervisory computer 60 comprises a wireless communication device 66 configured to communicate with the wireless communication device 18 of the programmable logic controller 12.

In such embodiment, the programmable logic controller 12 can send data to the supervisory computer 60 by wireless communication between the wireless communication device 18 of the programmable logic controller 12 and the wireless communication device 66 of the wire computer network 23.

The wireless communication between the supervisory computer 60 and the programmable logic controller 12 provided in addition to the wire communication may be used in case of loss of continuity of the wire communication.

Loss of continuity of the wire communication may result from a failure of the wire computer network 23, a maintenance operation of the wire computer network 23, a crisis situation of the at least one operational subsystem 4 of the operational system 2 and/or a dismantling operation of the operational system 2.

Alternatively or optionally, the wireless communication between the supervisory computer 60 and the programmable logic controller 12 provided in addition to the wire communication may be used for transferring data which have a refreshment time cycle which is compatible with wireless communication, more specifically which is longer than data transferred via the wire computer network 23.

The programmable logic controller 12 may be configured such that data transferred via the wireless communication between the supervisory computer 60 and the programmable logic controller 12 are exclusively data providing from or calculated as a function of data providing from the wireless operational unit(s) 10.

When provided, the electronic controller 16 is in communication with the programmable logic controller 12 and the supervisory computer 60 via the wire computer network 23.

The wire computer network 23 connecting the supervisory computer 60 and the controllers (including the programmable logic controller 12 and optionally the electronic controller 16) may be have a star shaped topology, with the center of the network being the supervisory computer 60.

In an example, the electronic controller 16 is in direct communication with the supervisory computer 60 via the wire computer network 23, and is in indirect communication with the programmable logic controller 12 via the supervisory computer 60.

The operational system 2 may be any kind of operational system, for example a power plant, in particular an electrical power plant, a wind turbine farm, a solar power plant or a nuclear power plant.

In a particular example, the operational system 2 is a nuclear power plant and the first operational subsystem 4 is a nuclear reactor. The nuclear reactor is located in a nuclear reactor building, the programmable logic controller 12 being located in a control building distinct from the nuclear reactor building.

A second operational subsystem 14 integrated at least one wireless operational unit 10 may be configured for monitoring safety and security of the first operational subsystem 4 and/or the programmable logic controller 12.

For example, the second operational subsystem 14 may comprises one or several sensing wireless operational unit(s) for sensing temperature inside the cabinet 48, for monitoring operation of one or several ventilator(s) provided for ventilating the inside of the cabinet 48, for monitoring opening of the cabinet 48 and/or for monitoring switching on or off of the programmable logic controller 12.

In such case, providing the operational unit(s) of the second operational subsystem 14 as wireless operation units 10 in wireless communication with the programmable logic controller 12 of the transfer of signal with the electronic controller 16 allows to easily retrofit the second operational subsystem 14 to the already existing programmable logic controller 12.

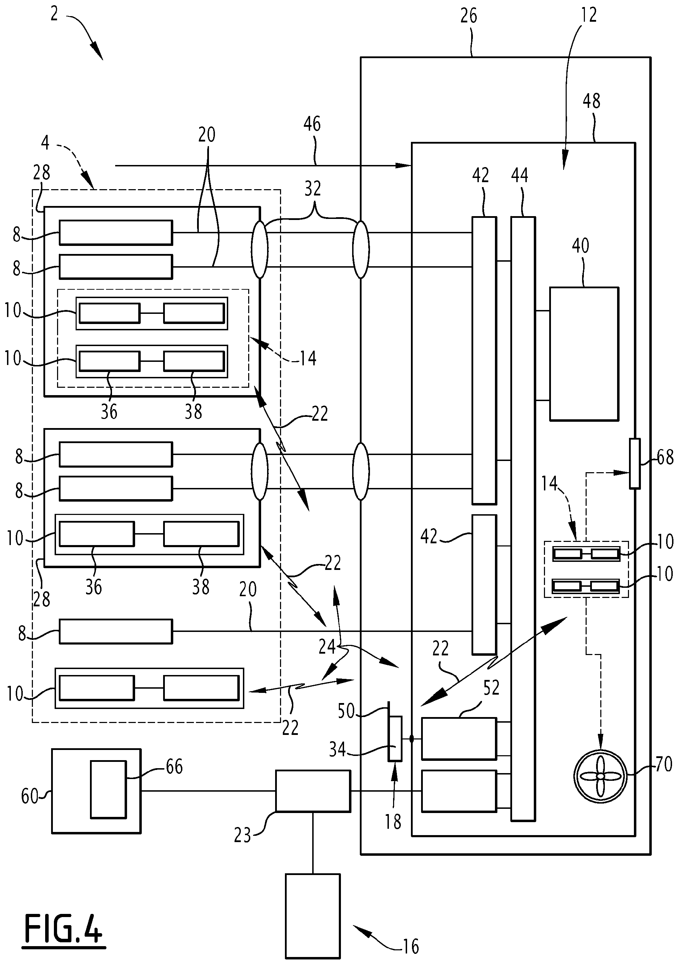

For example, in the embodiment illustrated on Figure 4, the operational system 2 comprises a second operational system 14 configured for controlling safety and security of the programmable logic controller 12.

The second operational subsystem 14 is for example configured for monitoring a lock 68 of the cabinet 48 housing the programmable logic controller 12 and/or a ventilator 70 configured for forcing air flow inside the cabinet 48 housing the programmable logic controller 12.

In the embodiment of Figure 4, the operational system 2 further comprises another second operational subsystem 14 which is housed in a building 28 housing at least in part the first operational subsystem 4.

In case the first operational subsystem 4 is configured for operation control of a nuclear reactor, this second operational subsystem 14 may be used to provide further detector or sensors, for example a valve position detector, a gas detector, a smoke detector...

Preferably, the second operational subsystem 14 is not involved in the critical safety or security of the nuclear reactor.

As already stated, the provision of wireless operational unit(s) 10 allows easily retrofitting operational units to the first operational subsystem 4 which is controlled by the programmable logic controller 12 and/or to a second operational subsystem 14 which is not controller by the programmable logic controller 12.

According the one aspect, the invention proposes a process of retrofitting an operational system 2 comprising a first operational subsystem 4, a programmable logic controller 12 for controlling the first operational system 4 and wired operational units 8 in communication with the programmable logic controller 12 via wire connections 20.

The retrofitting process comprises : retrofitting a wireless communication device 18 to the programmable logic controller 12 and providing at least one wireless operational unit 10 configured for wireless connection with the programmable logic controller 12 via the wireless communication device 18 retrofitted to the programmable logic controller 12.

At least one wireless operational unit 10 may be integrated in the first operational subsystem 4. In such case, the retrofitting process comprises configuring the programmable logic controller 12 for controlling the first operational subsystem 4 using said at least one wireless operational unit 10.

At least one wireless operational unit 10 may be integrated in an optional second operational subsystem 14. In such case, the retrofitting process comprises configuring the programmable logic controller 12 for transferring data between said at least one wireless operational unit 10 and the electronic controller 16 controlling the second operational subsystem 14.

Owing to the invention, the operational system has enhanced adaptability. The provision of at least one wireless communication device in the programmable logic controller and wireless operational unit configured for wireless communication allow easily adapting the operational system, e.g. during retrofit modifications of the operational subsystem under control of the programmable logic controller or another operational subsystem, the programmable logic controller being then used as a wireless communication channel.

The wireless communication device can be connected to the programmable logic controller, namely plugged to the programmable logic controller, in particular to the internal bus or to an I/O module, thus allowing communication with one or several wireless operational unit(s).

The LoRa wireless communication technology is one example of communication technology that allows wireless communication on a long range through building walls, even in operational systems such as nuclear power plant.

## Claims

1. An operational system comprising:
- an operational subsystem (4);
- a programmable logic controller (12) configured to control the operational subsystem (4),
- a plurality of wired operational units (8), each wired operational unit (8) being in communication with the programmable logic controller (12) via a wire connection (20);
wherein the programmable logic controller (12) is equipped with a wireless communication device (18) configured for wireless communication with at least one wireless operational unit (10).

2. The operational system as in claim 1, the wireless communication device (18) is in communication with a plurality of wireless operational units (10).

3. The operational system as in claim 1 or 2, wherein at least one wireless operational unit (10) is dedicated to the operational subsystem (4) which is controlled by the programmable logic controller (12).

4. The operational system as in any one of the preceding claims, wherein at least one wireless operational unit (10) is dedicated to another operational system (14) distinct from the operational system (4).

5. The operational system as in claim 4, wherein the programmable logic controller (12) is in communication with an electronic controller (16) configured for controlling the other operational subsystem (14), the programmable logic controller (12) being configured for transferring signals between each wireless operational unit (10) dedicated to said other operational system (14) and the electronic controller (16).

6. The operational system as in any one of the preceding claims, wherein the wireless communication device (18) is plugged directly to a port of an internal bus (44) of the programmable logic controller (12).

7. The operational system as in any one of the claims 1 - 5, wherein the wireless communication device (18) is connected to an internal bus (44) of the programmable logic controller (12) via a computer coupler (52), the computer coupler (52) being connected directly to a port of the internal bus (44).

8. The operational system as in any one of the claims 1 - 5, wherein the wireless communication device (18) is plugged directly to an I/O module (42) of the programmable logic controller (12).

9. The operational system as in claim 8, wherein the wireless communication device (18) is configured for communicating with the programmable logic controller (12) by emulating communication with a wired operational unit (8) connected to the I/O module (42).

10. The operational system as in any one of the preceding claims, wherein the programmable logic controller (12) is located inside a room or a building, the operational system (4) being located outside, in another room or in another building, the wire connection (20) between each wired operational unit (8) in communication with the programmable logic controller (12) extending through at least one wall of a room or building.

11. The operational system as in any one of the preceding claims, wherein the wireless communication device (18) is located inside a cabinet (48) housing the programmable logic controller (12) and is connected to an antenna located outside the cabinet (48) through a wall of the cabinet (48), or the wireless communication device (18) is located outside a cabinet (48) housing the programmable logic controller (12) and is wire connected to the programmable logic controller (12) through a wall of the cabinet (48).

12. The operational system as in any one of the preceding claims, wherein the wireless communication device (18) is a computer network gateway configured for interfacing the programmable logic controller (12) with a wireless communication network (24) defined by the wireless communication device (18) and the wireless operational unit(s) (10).

13. The operational system as in any preceding claim, wherein the operational subsystem (4) is dedicated to the operational control of a nuclear reactor.

14. The operational system as in any one of the preceding claims, wherein the operational subsystem (4) under control of programmable logic controller (12) is located at least in part in a nuclear reactor building, the programmable logic controller (12) being located in a control building distinct from the nuclear reactor building and/or at least some of the operational unit(s) (8, 10) are located in at least one operational building and the programmable logic controller (12) is located in a control building distinct from each operational building.

15. Process of retrofitting an operational system comprising an operational subsystem (4), a programmable logic controller (12) configured to control the operational subsystem (4) and a plurality of wired operational units (8), each wired operational unit (8) being in communication with the programmable logic controller (12) via a wire connection (20), the process comprising
- retrofitting a wireless communication device (18) to the programmable logic controller (12), and
- providing at least one wireless operational unit (10), each wireless operational unit (10) being configured for wireless communication with the programmable logic controller (12) via the wireless communication device (18).

16. Process of retrofitting an operation system as in claim 15, wherein at least one wireless operational unit (10) dedicated to the operational subsystem (4) is provided and/or at least one wireless operational unit (10) dedicated to another operational subsystem (14) distinct from the operational subsystem (4) is provided, said at least one wireless operational unit (10) being in communication with an electronic controller (16) configured for controlling the other operational subsystem (14) via the programmable logic controller (12).
